# EUROPÄISCHE PATENTSCHRIFT

(11) **EP 1 465 766 B1**
(45) Veröffentlichungstag und Bekanntmachung des Hinweises auf die Patenterteilung: **28.06.2006**
(21) Anmeldenummer: 02799742.8
(22) Anmeldetag: 09.12.2002
(51) Int. Cl.: B32B 3/14, B32B 3/24, B32B 27/08, B65D 75/00

(54) **PERFORIERTE STRETCHFOLIE**
STRETCH FILM
FILM ETIRABLE

(30) Priorität: 16.01.2002 DE 10201480
(43) Veröffentlichungstag der Anmeldung: 13.10.2004
(73) Patentinhaber: Mega Plast S.A., Heraklion 71001, Kreta (GR)
(72) Erfinder: KAVVADIAS, Harilaos, 71409 Heraklion, Crete (GR); MARKAKIS, Damianos, GR-71500 Heraklion, Kreta (GR)
(74) Vertreter: Müller - Hoffmann & Partner
(86) Internationale Anmeldenummer: PCT/EP2002/013938
(87) Internationale Veröffentlichungsnummer: WO 2003/059750

(56) Entgegenhaltungen:
- EP-A- 0 418 773
- EP-A- 0 820 856
- DE-A- 10 027 527
- US-A- 4 410 587
- US-A- 4 587 175
- US-A- 4 963 412

## Beschreibung

Die Erfindung betrifft eine Stretchfolie gemäß dem Oberbegriff von Patentanspruch 1.

Zum Verpacken von Paletten, Strohballen, Früchten, etc. ist es bekannt, gelochte Kunststoff-Stretchfolien bzw. -streckfolien zu verwenden, um eine ausreichende Dehnbarkeit sowie eine Belüftung der zu verpackenden Gegenstände zu ermöglichen. Aus der EP-820 856 A1 ist eine vorgestreckte Kunststoff-Stretchfolie bekannt, bei der Löcher durch ein thermisches Bestrahlungsverfahren ohne Berühren der Folie und damit ohne Folienabfall, z. B. Ausstanzungen, erzeugt werden. Das dort beschriebene Herstellungsverfahren kommt z. B. auch bei der Herstellung von Kunststoffnetzen, wie in der DE 100 27 527 A1 beschrieben, zur Anwendung.

Bei gelochten Stretchfolien kann das Problem auftreten, das beim späteren Verstrecken der Stretchfolie Risse an den Rändern der Löcher entstehen. Die Risse stören nicht nur die äußere Anmutung der Folie; sie können auch Ausgangspunkt für ein vollständiges Durchreißen der Folie, zumindest aber für eine erhebliche Schwächung sein.

Der Erfindung liegt die Aufgabe zugrunde, eine Stretchfolie anzugeben, die hohe Dehnraten ermöglicht, ohne dass die Folie an den Rändern der Löcher einreißt.

Die erfindungsgemäße Lösung der Aufgabe ist in Patentanspruch 1 definiert. Vorteilhafte Weiterentwicklungen der Erfindung sind in den abhängigen Ansprüchen angegeben.

Eine erfindungsgemäße Stretchfolie ist dadurch gekennzeichnet, dass auf dem Träger, zwischen den Lochreihen, wenigstens eine Lage von aus einem Folienmaterial bestehenden Streifen angebracht ist, wobei sich die Streifen in der Hauptrichtung erstrecken. Die Streifen verstärken das Folienmaterial des Trägers zwischen den Lochreihen und verhindern somit das Entstehen und insbesondere das Ausbreiten von Rissen.

Bei einer besonders vorteilhaften Ausführungsform der Erfindung ist die Breite wenigstens eines Teils der Streifen quer zu der Hauptrichtung derart bemessen, dass die Streifen jeweils bis zu den an sie angrenzenden Lochreihen heranreichen. Das bedeutet, dass die auf dem Träger (der Trägerfolie) aufgebrachten Folienstreifen tangential an den Lochreihen anliegen und sogar die Lochränder berühren können. Somit sind die Stellen des Trägers, an denen aufgrund der durch die Löcher verursachten Kerbwirkung das Entstehen von Rissen am wahrscheinlichsten ist, durch die zusätzlich aufgebrachten Folienstreifen verstärkt.

Bei einer weiteren vorteilhaften Ausgestaltung der Erfindung sind mehrere Lagen von Streifen übereinander auf dem Träger angebracht, wobei die übereinander angeordneten Streifen jeweils die gleiche Breite aufweisen. Somit wird zusätzlich zu der erhöhten Dehnbarkeit auch eine höhere Festigkeit der Stretchfolie erreicht.

Besonders vorteilhaft ist es, dass die auf dem Träger befestigten Streifen im Wesentlichen glatt, wenigstens aber faltenfrei und ohne Kräuselung am Träger anliegen. Dadurch besteht ein großflächiger Kontakt und eine enge Anschmiegung zwischen dem Träger und den Streifen, so dass die beim Dehnen im Folienmaterial auftretenden Spannungen auch über die Grenzoberflächen in Form von Scherspannungen übertragen werden können. Wenn die Streifen Falten oder Kräuselungen aufweisen würden, wären sie nicht in der Lage, Spannungen aus der Trägerfolie in relevantem Maß aufzunehmen, da vielmehr bei einer Dehnung der Trägerfolie zunächst die Faltungen oder Kräuselungen der Folienstreifen geglättet würden.

Dabei ist es besonders vorteilhaft, dass die Streifen durch Adhäsion auf dem Träger oder auf dem sie tragenden zugehörigen Streifen befestigt sind. Die Streifen lassen sich also ohne Verschweißung und ohne Klebung befestigen.

Besonders vorteilhaft lassen sich die Löcher im Träger durch ein thermisches Bestrahlungsverfahren ohne Berühren des Trägers herstellen, wonach jedes Loch durch einen Wulst mit einer Dicke umgeben ist, die größer ist als die Dicke des Trägers. Ein entsprechendes Herstellungsverfahren wird in der EP 820 856 A1 beschrieben.

Besonders vorteilhaft ist es, wenn die Löcher von benachbarten Lochreihen bezüglich der Hauptrichtung versetzt sind. Das bedeutet, dass die Löcher von zwei benachbarten Lochreihen bezüglich der Hauptrichtung nicht auf einer Höhe angeordnet sind. Dadurch ist jedes Loch ausreichend von Foilenmaterial umgeben, was der Dehnbarkeit zugute kommt.

Eine weitere Ausführungsform der Erfindung ist dadurch gekennzeichnet, dass die gesamte Stretchfolie, also der Träger zusammen mit den Streifen vorgedehnt ist. Das bedeutet, dass die Stretchfolie insgesamt dünner wird und pro Längeneinheit der Stretchfolie weniger Material eingesetzt werden muss. Eine derartige Stretchfolie ist insbesondere für Wickelmaschinen bekannt, die die erhöhte Dehnbarkeit der nicht vorgedehnten Stretchfolie nicht ausnutzen können, und somit ein Arbeiten mit der ungedehnten Stretchfolie von wirtschaftlichem Nachteil wäre.

Diese und weitere Vorteile und Merkmale der Erfindung werden nachfolgend anhand eines Beispiels unter Zuhilfenahme der begleitenden Figuren näher erläuert. Es zeigen:
- **Fig. 1**: eine Draufsicht auf einen Teil einer erfindungsgemäßen Stretchfolie;
- **Fig. 2**: einen Schnitt entlang der Linie A-A in Fig. 1;
- **Fig. 3**: eine Ausschnittsvergrößerung eines in Fig. 2 gezeigten Lochs; und
- **Fig. 4**: eine Draufsicht auf die Stretchfolie von Fig. 1 nach einem Dehnvorgang.

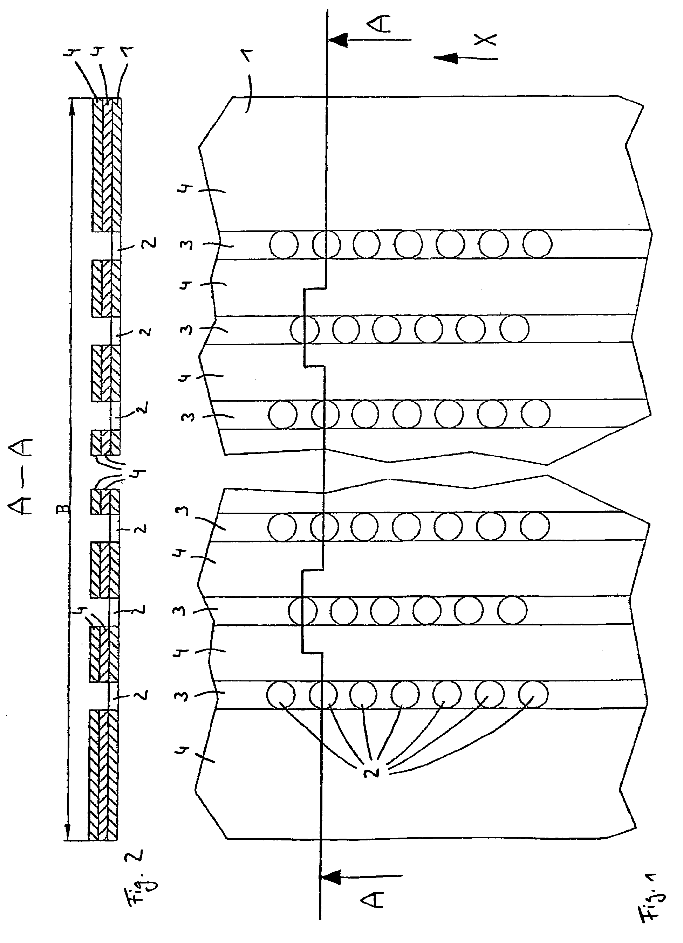

Da die Fig. 1 bis 3 die gleiche Stretchfolie in unterschiedlichen Ansichten zeigen, werden sie gemeinsam zur Erläuterung herangezogen.

In einem aus einem Folienmaterial bestehenden Träger 1 mit einer Breite B sind z. B. mit Hilfe des in der EP 820 856 A1 beschriebenen Verfahrens viele Löcher 2 in Form von mehreren, im Wesentlichen parallelen, sich in einer Hauptrichtung X erstreckenden Lochreihen 3 ausgebildet. Der Träger 1 besitzt eine große Länge und kann in Richtung X auf- bzw. abgewickelt werden.

Bei dem in der EP 820 856 A1 beschriebenen Herstellungsverfahren entsteht nach der thermischen Einwirkung ein Wulst, der jedes Loch 2 mit einer Dikke umgibt, die größer ist als eine Dicke des Trägers 1. Dieser Wulst ermöglicht es, die das Loch 2 umgebende Folie stärker zu dehnen, ohne dass ein Riss am Lochrand entsteht.

Zwischen den Lochreihen 3 sind auf dem Träger 1 aus einem Folienmaterial bestehende Streifen 4 angebracht. Sie erstrecken sich in Richtung der Hauptrichtung X. Ihre Breite ist derart bemessen, dass sie jeweils bis an die an sie angrenzenden Lochreihen 3 heranreichen. Idealerweise enden die Streifen 4 genau dort, wo sich die Lochränder befinden. An den äußeren Rändern des Trägers 1 (in den Fig. 1 und 2 links und rechts außen) decken die Streifen 4 den Träger 1 an seiner Oberseite vollständig bis zum Rand ab.

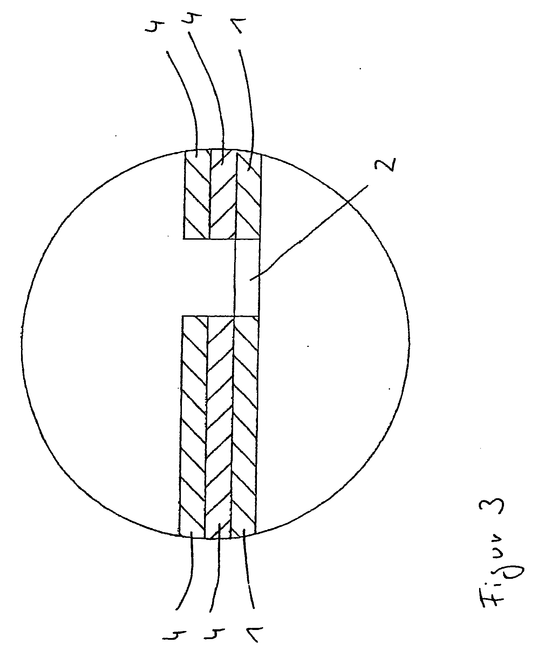

Wie in den Fig. 2 und 3 erkennbar, sind auf dem Träger 1 zwei Lagen von Streifen 4 übereinander befestigt. Es ist aber auch möglich, lediglich einen Streifen 4, aber auch noch mehr Streifen übereinander auf dem Träger 1 anzubringen. Es hat sich herausgestellt, dass bei zwei Lagen von Streifen 4 eine optimale Dehnbarkeit der Stretchfolie erreicht werden kann. Eine weitere Erhöhung der Lagenanzahl bringt zwar keine bessere Dehnbarkeit; es lassen sich aber erheblich höhere Festigkeiten erzielen.

Die Streifen 4 werden nicht durch Klebe- oder Schweißmaßnahmen auf dem Träger 1 bzw. dem jeweils darunterliegenden Streifen 4 befestigt. Vielmehr können die Streifen 4 angedrückt werden und haften aufgrund von Adhäsion zuverlässig.

Es ist wichtig, dass die Streifen 4 ohne Falten oder Kräuselungen möglichst glatt auf dem Träger 1 aufliegen. Dadurch lässt sich eine Rissbildung an den Rändern der Löcher 2 zuverlässig vermeiden, so dass höhere Dehnwerte erreichbar sind. Eventuelle Knicke, Wölbungen oder durch Wärmeeinwirkung hervorgerufene Verwerfungen in den Streifen sind unschädlich, solange ein großflächiger Kontakt zwischen der gesamten Streifenoberfläche und dem Träger 1 gegeben ist.

Als Folienmaterial eignet sich LLDPE (Linear Low Density Polyethylen), gegebenenfalls mit einer Beimischung von Linear Very Low Density PE. Der Träger 1 und die Streifen 4 können aus gleichem Folienmaterial bestehen. Bei bestimmten Anwendungsfällen ist es aber auch denkbar, unterschiedliche Folienmaterialien, z. B. auch für unterschiedliche Streifenlagen einzusetzen.

Bezüglich der Dimensionen der Stretchfolie wird beispielhaft angegeben, dass die Löcher einen Durchmesser von 12 mm haben können und z. B. 18 Streifen 4 nebeneinander auf der Folie befestigt sind. Die Breite B des Trägers kann bei 500 bis 700 mm liegen.

Die erfindungsgemäße Stretchfolie kann vorzugsweise mit Hilfe von Wickelmaschinen zum Einsatz kommen, die die hervorragende Dehnbarkeit von beispielsweise 200 % ausnutzen, um eine ausreichende Materialausbeute zu erhalten.

Weiterhin ist es möglich, die erfindungsgemäße Stretchfolie z. B. um 100 % vorzudehnen. Das daraus resultierende Folienprodukt eignet sich insbesondere für Wickelmaschinen, die nicht in der Lage sind, die hohe Dehnbarkeit (z. B. 200 %) voll auszunutzen. Die vorgedehnte Stretchfolie ist preiswerter, da ein geringerer Materialaufwand pro Länge erforderlich ist. Somit lassen sich auch Wickelmaschinen wirtschaftlich betreiben, die die eigentliche Dehnbarkeit der erfindungsgemäßen Stretchfolie nicht ausnutzen könnten.

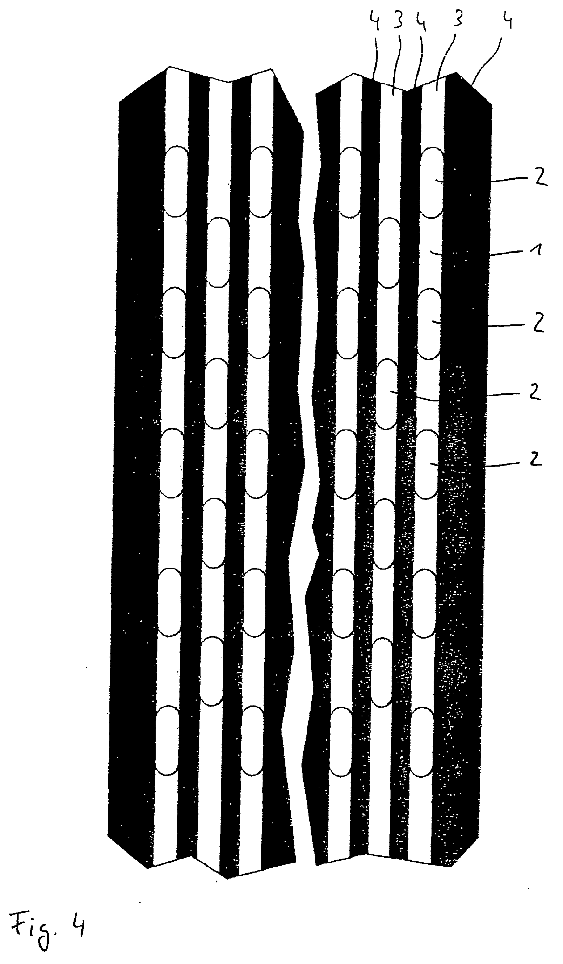

In Fig. 4 ist eine der Fig. 1 entsprechende Draufsicht auf die Stretchfolie gezeigt, nachdem sie einer Dehnung von 250 % unterzogen wurde. Zur Verdeutlichung sind die Streifen 4 schwarz angelegt. Gut erkennbar ist, dass die Löcher 2 gedehnt wurden, wobei ihre an die Streifen 4 angrenzenden Ränder durch die Streifen 4 eine Unterstützung derart gefunden haben, dass eine Rissbildung zuverlässig vermieden werden kann.

## Patentansprüche

1. Stretchfolie, mit
- einem aus einem Folienmaterial bestehenden Träger (1);
- einer Vielzahl von Löchern (2), die in dem Träger (1) in mehreren, im Wesentlichen parallelen, sich in einer Hauptrichtung erstreckenden Lochreihen (3) ausgebildet sind;
**dadurch gekennzeichnet, dass** auf dem Träger (1), zwischen den Lochreihen (3), wenigstens eine Lage von aus einem Folienmaterial bestehenden Streifen (4) angebracht sind, die sich in der Hauptrichtung (X) erstrecken.

2. Stretchfolie nach Anspruch 1, **dadurch gekennzeichnet, dass** die Breite wenigstens eines Teils der Streifen (4) quer zu der Hauptrichtung (X) derart bemessen ist, dass die Streifen (4) jeweils bis an die an sie angrenzenden Lochreihen (3) heranreichen.

3. Stretchfolie nach Anspruch 1 oder 2, **dadurch gekennzeichnet, dass** mehrere Lagen von Streifen (4) übereinander auf dem Träger (1) angebracht sind und die übereinander angeordneten Streifen (4) jeweils die gleiche Breite aufweisen.

4. Stretchfolie nach einem der Ansprüche 1 bis 3, **dadurch gekennzeichnet, dass** die Streifen (4) im Wesentlichen glatt, wenigstens aber faltenfrei sind.

5. Stretchfolie nach einem der Ansprüche 1 bis 4, **dadurch gekennzeichnet, dass** die Streifen (4) durch Adhäsion auf dem Träger (1) oder auf dem sie tragenden, zugehörigen Streifen (4) befestigt sind.

6. Stretchfolie nach einem der Ansprüche 1 bis 5, **dadurch gekennzeichnet, dass** die Streifen (4) ohne Verschweißung und ohne Klebung angebracht sind.

7. Stretchfolie nach einem der Ansprüche 1 bis 6, **dadurch gekennzeichnet, dass** die Löcher (2) durch ein thermisches Bestrahlungsverfahren ohne Berühren des Trägers (1) herstellbar sind.

8. Stretchfolie nach Anspruch 7, **dadurch gekennzeichnet, dass** jedes Loch (2) durch einen Wulst mit einer Dicke umgeben ist, die größer als eine Dicke des Trägers (1) ist.

9. Stretchfolie nach einem der Ansprüche 1 bis 8, **dadurch gekennzeichnet, dass** die Löcher (2) von benachbarten Lochreihen (3) bezüglich der Hauptrichtung (X) versetzt sind.

10. Stretchfolie nach einem der Ansprüche 1 bis 9, **dadurch gekennzeichnet, dass** der Träger (1) zusammen mit den Streifen (4) vorgedehnt ist.

## Claims

1. Stretch film, comprising
- a base (1) consisting of a film material;
- a multitude of holes (2) that are formed in the base (1) in several rows (3) of holes extending, in essence, in parallel to each other and in a main direction;
**characterized in that** at least one layer of strips (4) consisting of a film material and extending in the main direction (X) is attached to the base (1) between the rows (3) of holes.

2. Stretch film according to Claim 1, **characterized in that** the width of at least a part of the strips (4) extending in transverse direction in relation to the main direction (X) is dimensioned such that the strips (4) each reach up to the rows (3) of holes adjacent to said strips.

3. Stretch film according to Claim 1 or 2, **characterized in that** several layers of strips (4) are attached to the base (1) one above the other and that the strips (4) that are arranged one above the other each comprise the same width.

4. Stretch film according to one of Claims 1 through 3, **characterized in that** the strips (4) are, in essence, even, but at least without wrinkles.

5. Stretch film according to one of Claims 1 through 4, **characterized in that** the strips (4) are attached to the base (1) or the associated strip (4) carrying said strips by adhesion.

6. Stretch film according to one of Claims 1 through 5, **characterized in that** the strips (4) are applied without sealing or bonding.

7. Stretch film according to one of Claims 1 through 6, **characterized in that** the holes (2) can be made by utilizing a thermal irradiation method without touching the base (1).

8. Stretch film according to Claim 7, **characterized in that** each hole (2) is surrounded by a bead having a thickness that exceeds a thickness of the base (1).

9. Stretch film according to one of Claims 1 through 8, **characterized in that** the holes (2) of neighboring rows (3) of holes are staggered in relation to the main direction (X).

10. Stretch film according to one of Claims 1 through 9, **characterized in that** the base (1) is prestretched together with the strips (4).

## Revendications

1. Film étirable comprenant
- un support (1) composé d'un matériau en feuille et
- une multiplicité de trous (2) qui sont formés dans le support (1) sur plusieurs rangées de trous (3) sensiblement parallèles et s'étendant dans une direction principale,
**caractérisé en ce qu'**il est prévu sur le support (1), entre les rangées de trous (3), au moins une couche de bandes (4) formées d'un matériau en feuille qui s'étendent dans la direction principale (X).

2. Film étirable selon la revendication 1, **caractérisé en ce que** la largeur d'une partie au moins des bandes (4) est calculée, transversalement par rapport à la direction principale (X), pour que chaque bande (4) aille jusqu'aux rangées de trous (3) qui la bordent.

3. Film étirable selon la revendication 1 ou 2, **caractérisé en ce que** plusieurs couches de bandes (4) sont prévues les unes sur les autres sur le support (1), et les bandes superposées (4) ont la même largeur.

4. Film étirable selon l'une des revendications 1 à 3, **caractérisé en ce que** les bandes (4) sont sensiblement lisses, ou du moins sans plis.

5. Film étirable selon l'une des revendications 1 à 4, **caractérisé en ce que** les bandes (4) sont fixées par adhésion sur le support (1) ou sur la bande (4) associée qui la porte.

6. Film étirable selon l'une des revendications 1 à 5, **caractérisé en ce que** les bandes (4) sont appliquées sans soudage et sans collage.

7. Film étirable selon l'une des revendications 1 à 6, **caractérisé en ce que** les trous (2) peuvent être réalisés grâce à un procédé d'irradiation thermique, sans contact avec le support (1).

8. Film étirable selon la revendication 7, **caractérisé en ce que** chaque trou (2) est entouré par un renflement d'une épaisseur qui est supérieure à une épaisseur du support (1).

9. Film étirable selon l'une des revendications 1 à 8, **caractérisé en ce que** les trous (2) sont décalés par rapport aux rangées de trous (3) voisines, dans la direction principale (X).

10. Film étirable selon l'une des revendications 1 à 9, **caractérisé en ce que** le support (1) est pré-étiré avec les bandes (4).
